# EUROPÄISCHE PATENTSCHRIFT

(11) **EP 3 174 837 B1**
(45) Veröffentlichungstag und Bekanntmachung des Hinweises auf die Patenterteilung: **23.10.2019**
(21) Anmeldenummer: 15750295.6
(22) Anmeldetag: 30.07.2015
(51) Int. Cl.: C04B 24/02

(54) **ZWEIKOMPONENTEN-MÖRTELMASSE UND DEREN VERWENDUNG**
DUAL COMPONENT MORTAR COMPOSITION AND ITS USE
MASSE DE MORTIER BI-COMPOSANTS ET SON UTILISATION

(30) Priorität: 31.07.2014 EP 14179228
(43) Veröffentlichungstag der Anmeldung: 07.06.2017
(73) Patentinhaber: Hilti Aktiengesellschaft, 9494 Schaan (LI)
(72) Erfinder: GNAß, Beate, 86368 Gersthofen (DE); KUMRU, Memet-Emin, 86199 Augsburg (DE); PFEIL, Armin, 86916 Kaufering (DE); BUNZEN, Jens, 86163 Augsburg (DE); SHARMAK, Anna, 86159 Augsburg (DE)
(86) Internationale Anmeldenummer: PCT/EP2015/067524
(87) Internationale Veröffentlichungsnummer: WO 2016/016378

(56) Entgegenhaltungen:
- EP-A2- 2 371 782
- WO-A1-2009/130298

## Beschreibung

Die Erfindung betrifft eine Zweikomponenten-Mörtelmasse mit einer Harzkomponente (A), die wenigstens ein radikalisch härtbares Harz umfasst, und einer Härterkomponente (B) für das Harz der Harzkomponente (A). Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in einen mineralischen Untergrund eingebracht sind. Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Es ist weiter bekannt, dass die mechanischen Eigenschaften der ausgehärteten Mörtelmasse wesentlich durch die Qualität der Bohrlochreinigung und der Feuchtigkeit des mineralischen Untergrunds beeinflusst wird. In feuchten und/oder nur schlecht von Bohrstaub gereinigten Bohrlöchern tritt eine erhebliche Leistungsabnahme ein, die sich in verringerten Lastwerten der ausgehärteten Mörtelmasse zeigt.

Aus der EP 0 432 087 und der EP 0 589 831 sind Zweikomponenten-Mörtelmassen auf der Grundlage von Urethan(meth)acrylatharzen bekannt.

Die AU 2010200119 A1 zeigt, dass die Haftung solcher Mörtelmassen in feuchten Bohrlöchern durch eine Vorbehandlung mit (Meth)acryloxyalkyltrialkoxysilanen verbessert werden kann.

In der EP 2 371 782 A2 sind Zweikomponenten-Mörtelmassen offenbart, die als Harzkomponente ein Urethan(meth)acrylat und als weiteren Bestandteil mindestens ein (Meth)acryloxyalkyltrialkoxysilan und/oder ein Poly(meth)acryloxyalkylsilsesquioxan enthalten. Der Zusatz der Silanverbindungen soll eine verbesserte Haftung der Mörtelmassen an der Oberfläche von halbgereinigten und/oder feuchten Bohrlöchern in Beton ergeben.

Die DE 10 2009 019 898 A1 betrifft die Verwendung einer Zweikomponenten-Mörtelmasse zur Befestigung von Verankerungselementen in Löchern, wobei die Masse mindestens ein silanterminiertes Kunstharz und zusätzlich eine wasserbasierte Härterkomponente umfasst. Das silanterminierte Kunstharz soll durch Umsetzung beispielsweise eines vinylgruppenhaltigen Harzes mit einer Aminogruppen und/oder Thiolgruppen enthaltenden Silanverbindung erhältlich sein. Als vinylgruppenhaltige Harze werden Epoxy(meth)acrylate, ungesättigte Polyesterharze, Vinylesterharze, Urethan(meth)acrylate, Hydroxyalkyl(meth)acrylate, Alkyl-, Cycloalkyl- oder Aryl-mono, di-, tri-, tetra-, penta oder hexa-ol-(meth)acrylate oder (Poly)(meth)acrylate, oder Mischungen davon genannt. Als Beispiel ist jedoch nur die Umsetzung eines Isocyanates mit einem Aminosilan angegeben.

Die WO 2011/072789 A1 betrifft einen zwei- oder mehrkomponentigen Befestigungsmörtel zum Einmörteln von Verankerungsmitteln auf der Basis von radikalisch härtenden ungesättigten Reaktionsharzen in Löcher oder Spalten. Der Mörtel soll ferner Silane mit reaktiven Gruppen enthalten, die an der Polymerisation des radikalisch härtenden ungesättigten Reaktionsharzes teilnehmen können. Als Silane werden insbesondere solche genannt, die mindestens eine Amino-, Mercapto-, Epoxy-, Isocyanato-, Alkenyl-, (Meth)acryloyl und/oder Anhydrid-Gruppe tragen und mindestens eine Si-gebundene hydrolysierbare Gruppe beinhalten.

Die WO 2009/130298 A1 offenbart silylierte Polyurethane, die erhältlich sind durch Umsetzen mindestens einer Polyolverbindung mit einem Molekulargewicht von 4.000-20.000 Dalton mit einem Diisocyanat bei einem stöchiometrischen Überschuss der Diisocyanatverbindung gegenüber den OH-Gruppen der Polyolverbindung, wodurch ein Isocyanat-terminiertes Polyurethan-Prepolymer gebildet wird, und anschließendes Umsetzen des Polyurethan-Prepolymers mit einem oder mehreren OH-terminierten Silanen. Die so hergestellten silylierten Polyurethane werden als Klebstoff, Dichtstoff oder Beschichtungsmittel verwendet.

Die WO 2013/060767 A2 beschreibt allgemein ein Verfahren zur Herstellung eines silanfunktionellen Oligomers, beispielsweise eines Alkoxysilan-Polyurethans, das als vernetzbare Komponente einer Beschichtung verwendet werden kann. Das Verfahren umfasst das Umsetzen eines Aminoalkylsilans mit einem cyclischen Carbonat, Lacton oder Lactam unter Bildung eines hydroxyfunktionellen oder iminofunktionellen Silanzwischenprodukts und die Umsetzung des Silanzwischenprodukts mit einem Diisocyanat zur Bildung eines silanfunktionellen Polyurethans, wobei das molare Verhältnis des Gesamtanteils der OH-Gruppen oder NH-Gruppen auf dem Silanzwischenprodukt zu dem Diisocyanat im Bereich von 1,8 bis 2,2 liegt, vorzugsweise bei 2,0, so dass das resultierende Silanpolyurethan im Wesentlichen frei von Isocyanatgruppen ist.

Die im Stand der Technik bekannten Mörtelmassen zeigen bereits eine Verbesserung der Lastwerte in feuchten Bohrlöchern. Es kann jedoch gezeigt werden, dass die durch Verwendung von silanhaltigen Massen erzielte Eigenschaftsverbesserung über die Zeit abnehmen kann.

Gegenüber dem bekannten Stand der Technik besteht somit weiter Bedarf an Zweikomponenten-Mörtelmassen mit guter Haftung in feuchten Bohrlöchern, die einfach zu verarbeiten sind und bei denen die mechanischen Eigenschaften der ausgehärteten Mörtelmassen alterungsbeständig sind.

Es hat sich überraschenderweise gezeigt, dass diese Aufgabe durch eine Zweikomponenten-Mörtelmasse gemäß Anspruch 1 gelöst wird.

Bevorzugte Ausführungsformen der erfindungsgemäßen Mörtelmasse sind in den Unteransprüchen angegeben, die wahlweise miteinander kombiniert werden können.

Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in mineralischem Untergrund, vorzugsweise Beton, vorliegen.

In ihrer allgemeinen Form umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält,
wobei das radikalisch härtbare Harz erhältlich ist durch Umsetzung einer mindestens difunktionellen Komponente, die zwei oder mehrere reaktive Gruppen (RG-A) aufweist, mit einer Silanzwischenverbindung und einer ethylenisch ungesättigten Verbindung, wobei die Silanzwischenverbindung und die ethylenisch ungesättigte Verbindung jeweils aktive funktionelle Gruppen (AG) aufweisen, die mit den reaktiven Gruppen (RG-A) unter Bildung einer kovalenten Bindung reagieren,
wobei die Silanzwischenverbindung das Umsetzungsprodukt einer cyclischen organischen Verbindung mit einer funktionalisierten Silanverbindung ist, die wenigstens eine reaktive Gruppe (RG-B) aufweist, wobei die cyclische organische Verbindung die aktive funktionelle Gruppe (AG) oder einen Vorläufer dafür und eine reaktive Gruppe (RG-C) aufweist, die mit der reaktiven Gruppe (RG-B) der funktionalisierten Silanverbindung unter Bildung der Silanzwischenverbindung reagiert.

Der Anteil der zur Umsetzung mit der difunktionellen Komponente eingesetzten Silanzwischenverbindung in der Mörtelmasse beträgt mindestens etwa 2 Gew.-%, bezogen auf das Gewicht der organischen Bestandteile der Harzkomponente (A).

Die reaktiven Gruppen (RG-A) auf der mindestens difunktionellen Komponente liegen gegenüber den aktiven Gruppen (AG) auf der Silanzwischenverbindung vorzugsweise höchstens in einem stöchiometrischen Verhältnis, bevorzugt im Unterschuss vor. Dadurch ist gewährleistet, dass das radikalisch härtbare Harz im Wesentlichen frei von reaktiven Gruppen (RG-A) ist.

Die reaktiven Gruppen (RG-A) sind bevorzugt aus der aus Carboxylgruppen, Isocyanatgruppen, Oxirangruppen und Imidogruppen bestehenden Gruppe ausgewählt. Als mindestens difunktionelle Komponente können bevorzugt mindestens difunktionelle Carbonsäuren, Isocyanate und Epoxide eingesetzt werden.

Die aktiven Gruppen (AG) auf der Silanzwischenverbindung sind vorzugsweise aus der aus Carboxylgruppen, Hydroxygruppen, Aminogruppen und Thiogruppen bestehenden Gruppe ausgewählt.

Die cyclische organische Verbindung ist bevorzugt aus der aus cyclischen Anhydriden, Carbonaten, Thiocarbonaten, Thiocarbamaten, Carbamaten, Harnstoffen, Lactonen und Lactamen bestehenden Gruppe ausgewählt. Bevorzugt reagiert die cyclische Verbindung unter Ringöffnung mit der funktionalisierten Silanverbindung unter Bildung der Silanzwischenverbindung mit der aktiven Gruppe (AG).

Als funktionalisierte Silanverbindung dient vorzugsweise ein Hydroxysilan, Mercaptosilan oder ein Aminosilan.

Besonders bevorzugt trägt die funktionalisierte Silanverbindung wenigstens eine Si-gebundene hydrolysierbare Gruppe. Die Si-gebundene hydrolysierbare Gruppe ist vorzugsweise eine C₁-C₄-Alkoxygruppe.

Gemäß einer besonders bevorzugten Ausführungsform umfasst die erfindungsgemäße Zweikomponenten-Mörtelmasse eine Harzkomponente (A), die als härtbaren Bestandteil mindestens ein radikalisch härtbares Harz enthält, und eine Härterkomponente (B), die ein Härtungsmittel für das Harz der Harzkomponente (A) enthält.

Die mindestens difunktionelle Kompenente ist bei dieser Ausführungsform ein mindestens difunktionelles Isocyanat, und die Silanzwischenverbindung ein hydroxyfunktionelles Silan.

Das radikalisch härtbare Harz der Komponente (A) ist somit erhältlich durch Umsetzung eines mindestens difunktionellen Isocyanats mit einem hydroxyfunktionellen Silan, vorzugsweise einem Alkoxysilan, und einer hydroxyfunktionellen, ethylenisch ungesättigten Verbindung.

Das hydroxyfunktionelle Silan ist das Umsetzungsprodukt einer cyclischen Verbindung aus der Gruppe der cyclischen Carbonate, Lactone und Lactame mit einer aus der Gruppe der amino-, hydroxy- oder mercaptofunktionellen Silane ausgewählten Silanverbindung.

In einer alternativen Ausführungsform kann als mindestens difunktionelle Komponente ein Polyester mit terminalen Carboxylgruppen verwendet werden.

Die Befestigung von Bauteilen unter Verwendung der erfindungsgemäßen Zweikomponenten-Mörtelmasse ergibt sowohl bei trockenen gereinigten Bohrlöchern als auch bei halbgereinigten und/oder feuchten Bohrlöchern hohe Lastwerte, die gegenüber silanfreien Massen deutlich erhöht sind und außerdem über lange Zeit stabil bleiben. Es wird angenommen, dass die kovalente Bindung der Silangruppen an das Urethan(meth)acrylatharz bereits vor der Aushärtung der Mörtelmasse eine verbesserte Einbindung der Silangruppen in das Polymernetzwerk ergibt.

Allgemein zeigen die im Stand der Technik beschriebenen Silyl-Verbindungen, die über zusätzliche Additive in die Harzzusammensetzung eingebracht werden, lediglich einen Grenzflächeneffekt. Liegt der Anteil der Silylverbindungen in der Harzzusammensetzung zu niedrig, stehen nicht mehr genügend Silylgruppen an der Grenzfläche zum Untergrund zur Verfügung. Überraschenderweise zeigen die erfindungsgemäßen Mörtelmassen schon bei einem relativ niedrigen Anteil der Silylmodifizierten Harzkomponente einen dauerhaften Grenzflächeneffekt, der zu einem geringen Lastwertabfall in feuchten Bohrlöchern führt.

Unter einer "Zweikomponenten-Mörtelmasse" wird im Sinne der Erfindung eine Mörtelmasse verstanden, die aus einer härtbaren Harzkomponente und einer Härterkomponente für die Harzkomponente besteht, wobei die Harzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktivharz unmittelbar vor der Anwendung der Mörtelmasse wird die Aushärtung des Reaktivharzes gestartet. Der Begriff "Silan-" oder "Silanverbindung" bezeichnet hier und im Folgenden ein wahlweise substituiertes Organosilan mit Si-C-, Si-O-, oder Si-N-Bindungen, beispielsweise mit Alkyl und/Alkoxyresten, die ihrerseits substituiert und/oder funktionalisiert sein können.

Das mindestens difunktionelle Isocyanat zur Herstellung des radikalisch polymerisierbaren Harzes kann ein aromatisches Isocyanat, ein aliphatisches Isocyanat, insbesondere ein cycloaliphatisches Isocyanat und ein Isocanatgruppen enthaltendes Präpolymer sein, die auch im Gemisch miteinander eingesetzt werden können.

Beispiele für geeignete aliphatische und aromatische Isocyanate umfassen m-Phenylendiisocyanat, Toluylen-2,4-diisocyanat, Toluylen-2,6-diisocyanat, Hexamethylen-1,6-diisocyanat, Tetramethylen-1,4-diisocyanat, Cyclohexan-1,4-diisocyanat, Hexahydrotoluylendiisocyanat, Naphthylen-1,5-diisocyanat, Methoxyphenyl-2,4-diisocyanat, Diphenylmethan-4,4'-diisocyanat, 4,4'-biphenylendiisocyanat, 3,3'-Dimethoxy-4,4'-biphenyldiisocyanat, 3,3'-Dimethyl-4,4'-biphenyldiisocyanat, 3,3'-Dimethyldiphenylmethan-4,4'-diisocyanat, 4,4',4"-Triphenylmethantriisocyanat, Polymethylenpolyphenylisocyanat, Toluylen-2,4,6-triisocyanat und 4,4'-Dimethyldiphenylmethan-2,2',5,5'-tetraisocyanat. Diphenylmethan-4,4'-diisocyanat, Diphenylmethan-2,4'-diisocyanat und Mischungen davon werden gemeinsam als MDI bezeichnet, und alle können verwendet werden. Toluylen-2,4-diisocyanat, Toluylen-2,6-diisocyanat und Mischungen davon werden allgemein als TDI bezeichnet, und können ebenfalls alle verwendet werden.

Bevorzugt ist das Polyisocyanat aus der aus Diphenylmethandiisocyanat (MDI), polymerem Diphenylmethandiisocyanat (PMDI), Toluylendiisocyanat (TDI), Hexandiisocyanat (HDI), Isophorondiisocyanat (IPDI) und Mischungen davon bestehenden Gruppe ausgewählt.

Isocyanat-Präpolymere, die durch Reaktion eines stöchiometrischen Überschusses eines beliebigen Polyisocyanats mit einer isocyanatreaktiven Verbindung als Kettenverlängerer hergestellt werden, können ebenfalls verwendet werden, wahlweise im Gemisch mit den oben genannten aromatischen und aliphatischen Isocyanaten.

Beispiele für derartige Kettenverlängerer sind zweiwertige Alkohole wie Ethandiol, Diethylenglycol, Triethylenglycol und Polyethylenglycol, Propandiol, Dipropylenglycol, Tripropylenglycol und Polypropylenglycol, 1,4-Butandiol, 1,6-Hexandiol, Neopentylglycol und Diethanolamin, weiter aromatische Alkohole wie Bisphenol-A und Bisphenol-F oder deren Ethoxylierungsprodukte, Hydrierungsprodukte und/oder Halogenierungsprodukte, höherwertige Alkohole wie Glycerin, Trimethylolpropan, Hexantriol und Pentaerythrit, hydroxylgruppenhaltige Polyether wie beispielsweise Oligomere aliphatischer oder aromatischer Oxirane und/oder höherer cyclischer Ether, beispielsweise von Ethylenoxid, Propylenoxid, Styroloxid und Furan, Polyether, die in der Hauptkette aromatische Struktureinheiten enthalten, wie beispielsweise die Polyether des Bisphenol A und F, sowie hydroxylgruppenhaltige Polyester auf Basis der obengenannten Alkohole und Polyether mit Dicarbonsäuren oder ihrer Anhydride wie Adipinsäure, Phthalsäure, Tetra- oder Hexahydrophthalsäure, Hetsäure, Maleinsäure, Fumarsäure, Itaconsäure und Sebacinsäure.

Kettenverlängerer mit aromatischen Struktureinheiten dienen zur Kettenversteifung des Harzes. Hydroxylverbindungen mit ungesättigten Struktureinheiten wie Fumarsäure können zur Erhöhung der Vernetzungsdichte während der Aushärtung herangezogen werden. Verzweigte oder sternförmige Hydroxylverbindungen als Kettenverlängerer, insbesondere drei- und höherwertige Alkohole sowie Polyether und/oder Polyester, die deren Struktureinheiten enthalten, ergeben verzweigte oder sternförmige Urethan(meth)acrylate, die eine niedrigere Viskosität der Harze und eine verbesserte Löslichkeit in Reaktivverdünnern aufweisen.

Die hydroxyfunktionelle (Meth)acrylverbindung zur Herstellung des radikalisch polymerisierbaren Harzes der Harzkomponente (A) ist vorzugweise ein (Meth)acrylsäurehydroxyalkylester, wie Hydroxyethyl(meth)acrylat, Hydroxypropyl(meth)acrylat, Polyoxyethylen(meth)acrylat, Polyoxypropylen(meth)acrylat, oder ein hydroxylgruppenhaltiger (Meth)acrylsäureester von mehrwertigen Alkoholen wie Pentaerythrittri(meth)acrylat, Glyceroldi(meth)acrylat, Trimethylolpropandi(meth)acrylat und Neopentylglycolmono(meth)acrylat.

Die hier und im Folgenden verwendete Bezeichnung "(Meth)acryl..." oder "...(meth)acryl..." bedeutet, dass von dieser Bezeichnung sowohl die Acrylgruppe als auch die Methacrylgruppe umfasst sein soll.

Die zur Herstellung des hydroxyfunktionellen Silans verwendete Silanverbindung ist vorzugsweise ein Aminosilan mit primären oder sekundären Aminogruppen.

Die Silangruppe der Silanverbindung trägt vorzugsweise wenigstens einen hydrolysierbaren Rest, insbesondere einen Alkoxyrest. Bevorzugt trägt die Silangruppe wenigstens eine, bevorzugt zwei, besonders bevorzugt drei Alkoxygruppen. Bevorzugt sind Alkoxygruppen mit 1 bis 4 Kohlenstoffatomen, besonders bevorzugt Methoxy- und/oder Ethoxygruppen.

Die Aminogruppe, Hydroxygruppe oder Thiolgruppe der amino-, hydroxy- oder mercaptofunktionellen Silanverbindung ist vorzugsweise auf einem organischen Rest mit 1 bis 10 C-Atomen angeordnet, vorzugsweise einer Alkylengruppe mit 1 bis 4 C-Atomen, die wahlweise substituiert sein kann.

Beispiele für geeignete aminofunktionelle Silanverbindungen sind:
3-Aminopropyltrimethoxysilan, 3-Aminopropyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Amino-propyltris(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Amino-butylphenyldiethoxysilan, 4-Amino(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-*n*-propoxysilan, 3-Aminopropylmethyldibutoxysilan, 3-Aminopropyldiethylmethylsilan, 3-Aminopropylmethylbis(trimethylsiloxy)silan, 1,1-Aminoundecyltrimethoxysilan, *N*-Methyl-3-aminopropyltriethoxysilan, *N*-(*n*-Butyl)-3-aminopropyltrimethoxysilan, *N*-(2-Aminoethyl)-3-aminopropyltrimethoxysilan, *N*-(2-Aminoethyl)-3-aminoisobutylmethyldimethoxysilan, *N*-(2-Aminoethyl)-3-aminopropylmethyldimethoxysilan, *N*-(2-Aminoethyl)-3-aminopropyltris(2-ethylhexoxy)silan, *N*-(6-Aminohexyl)-3-aminopropyltrimethoxysilane, *N*-Benzyl-*N*-(2-aminoethyl)-3-aminopropyltrimethoxysilan, Bis(3-trimethoxysilanpropyl)amin, Bis(3-triethoxysilanpropyl)amin, (Aminoethylaminomethyl)phenethyltrimethoxysilane, 3-(m-Amino-phenoxy)propyltrimethoxysilan, m-und/oder p-Aminophenyltrimethoxysilan, 3-(3-Aminopropoxy)-3,3-dimethyl-1-propenyltrimethoxysilan, 3-Aminopropylmethylbis-(trimethylsiloxy)silan, 3-Aminopropyltris(trimethylsiloxy)silan, 3-Aminopropylpentamethyldisiloxan, *N*,*N*-Bis-(3-trialkoxysilanpropyl)-amin sowie Mischungen davon.

Die amino-, hydroxy- oder mercaptofunktionellen Silanverbindung wird vorzugsweise mit einem cyclischen Carbonat, Lacton und/oder Carbamat unter Bildung des hydroxyfunktionellen Silans umgesetzt.

Beispiele für geeignete cyclische Carbonate sind 1,3-Dioxolan-2-on (Ethylencarbonat), 4-Methyl-1,3-dioxolan-2-on (Propylencarbonat), 4-Ethyl-1,3-dioxolan-2-on (Butylencarbonat), 4,5-Dimethyl-1,3-dioxolan-2-on, 4,4-Dimethyl-1,3-dioxolan-2-on, 4-Hydroxymethyl-1,3-dioxolan-2-on, 4-Phenoxymethyl-1,3-dioxolan-2-on, 1,3-Dioxan-2-on; 5,5-Dimethyl-1,3-dioxan-2-on, 5-Methyl-5-propyl-1,3-dioxan-2-on, 5-Ethyl-5-(hydroxymethyl)-1,3-dioxan-2-on; 4-Isopropyl-5,5-dimethyl-1,3-dioxan-2-on; 4-*tert-*Butyl-5-methyl-1,3-dioxan-2-on, 2,4-Dioxaspiro[5.5]undecan-3-on und Mischungen davon.

Beispiele für geeignete cyclische Lactone sind Propiolacton, Butyrolacton und Caprolacton.

In der hier beschriebenen Ausführungsform bevorzugte cyclische Verbindungen sind Ethylencarbonat, Propylencarbonat und Butylencarbonat.

Das aus der Umsetzung der amino-, hydroxy- oder mercaptofunktionellen Silanverbindung mit dem cyclischen Carbonat, Lacton oder Carbamat erhältliche hydroxyfunktionelle Silan entspricht vorzugsweise der folgenden Formel (I): 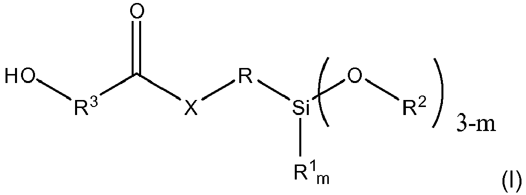
worin m 0, 1 oder 2 ist,
R¹ ein Alkylrest mit 1 bis 4 Kohlenstoffatomen,
R² ein Alkylrest mit 1 bis 4 Kohlenstoffatomen,
R³ ein divalenter organischer Rest mit 1 bis 10 Atomen ausgewählt aus C, N, S und/oder O in der Kette ist,
X bedeutet O, NR⁴ oder S,
wobei R⁴ ein Wasserstoffatom oder ein Alkylrest mit 1 bis 10 Kohlenstoffatomen ist und
R eine difunktionelle organische Gruppe ist.

In der obigen Formel (I) weist R³ vorzugsweise die folgenden Strukturelemente (II) auf 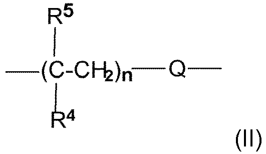
worin n eine ganze Zahl zwischen 1 und 6 ist,
Q eine kovalente Bindung, O, oder NR⁴ bedeutet, und
R⁴ und R⁵ unabhängig voneinander ein Wasserstoffatom oder ein Alkylrest mit 1 bis 10 Kohlenstoffatomen sind.

Die difunktionelle Gruppe R in der obigen Formel (I) ist vorzugsweise ein linearer oder verzweigter Alkylenrest mit 2 bis 10 C-Atomen, vorzugsweise 2 bis 6 C-Atomen.

Die Umsetzung des mindestens difunktionellen Isocyanats mit dem hydroxyfunktionellen Silan und der hydroxyfunktionellen, ethylenisch ungesättigten Verbindung erfolgt derart, dass das so erhaltene radikalisch polymerisierbare Harz der Harzkomponente (A) im Wesentlichen frei von freien Isocyanatgruppen ist. Im Wesentlichen frei bedeutet hier, dass das Harz einen NCO-Gehalt von weniger als 2% aufweist, vorzugsweise weniger als 1% und besonders bevorzugt weniger als 0,3%. Dazu werden das hydroxyfunktionelle Silan und die hydroxyfunktionellen, ethylenisch ungesättigten Verbindung zusammen in einem stöchiometrischen Überschuss über die Isocyanatgruppen eingesetzt.

Die Umsetzung kann in einer Einstufenreaktion erfolgen oder in zwei getrennten Stufen durchgeführt werden, wobei zunächst das hydrofunktionelle Silan und das Isocyanat zu einem Zwischenprodukt und dann das Zwischenprodukt mit der hydroxyfunktionellen, radikalisch ungesättigten Verbindung umgesetzt wird.

Das molare Verhältnis von Isocyanatgruppen zum hydroxyfunktionellen Silan beträgt vorzugsweise von 25:1 bis 3:1, bevorzugt 23:1 bis 3,5:1, weiter bevorzugt von 23:1 bis 5:1, bevorzugt von 20:1 bis 10:1 und besonders bevorzugt von 15:1 bis 10:1.

Bezogen auf das Gewicht der organischen Bestandteile in der Harzkomponente (A) liegt der Anteil des hydroxyfunktionellen Silans bevorzugt im Bereich von 2 Gew.-% bis 7 Gew.-%, weiter bevorzugt von 2,5 Gew.-% bis 6 Gew.-%, und besonders bevorzugt von 3 Gew.-% bis 5 Gew.-%.

Überraschenderweise wurde gefunden, dass bei schon bei geringen Silananteilen im radikalisch polymerisierbaren Harz eine deutliche Verringerung des Lastwertabfalls im Vergleich zu den Lastwerten von trockenem Beton erreicht werden kann. Eine Steigerung des Silananteils auf über 7 Gew.-% ist zwar möglich, ergibt aber keine besseren Resultate.

Das durch Umsetzung des mindestens difunktionellen Isocyanats mit dem hydroxyfunktionellen Silan und der hydroxyfunktionellen, ethylenisch ungesättigten Verbindung erhaltene silanierte (Poly)urethan(meth)acrylat kann alleine oder zusammen mit weiteren radikalisch polymerisierbaren Harzen wie Vinylestern, Epoxy(meth)acrylaten und ungesättigten Polyesterharzen eingesetzt werden.

Ungesättigte Polyesterharze werden durch Umsetzung von ungesättigten Dicarbonsäuren wie o- und/oder *iso*-Phthalsäure, Maleinsäure und Fumarsäure mit Dialkoholen erhalten.

Als Epoxy(meth)acrylate werden üblicherweise Kondensate von (Meth)acrylsäure mit Glycidylethern von Bisphenol-A, Bisphenol-F oder Novolaken eingesetzt.

Gemäß einer weiteren Ausführungsform der erfindungsgemäßen Mörtelmasse kann das radikalisch härtbare Harz durch Umsetzung eines mindestens difunktionellen Epoxids mit der Silanzwischenverbindung und einer carboxyfunktionellen ethylenisch ungesättigten Verbindung erhalten werden.

Die aktiven Gruppen (AG) auf der Silanzwischenverbindung sind bei dieser Ausführungsform vorzugsweise Carboxylgruppen oder Aminogruppen.

Die carboxyfunktionelle ethylenisch ungesättigte Verbindung ist vorzugsweise eine wahlweise substituierte (Meth)acrylsäure, die gegenüber Epoxidgruppen reaktiv ist.

Die mindestens difunktionelle Epoxidverbindung ist vorzugsweise ein Glycidylether von Bisphenol-A, Bisphenol-F oder von Novolaken.

Die carboxy- oder aminofunktionelle Silanzwischenverbindung kann durch Umsetzung eines cyclischen Anhydrids, beispielsweise von Bernsteinsäureanhydrid oder Glutarsäureanhydrid und substituierten Derivaten davon, mit einem amino- oder hydroxyfunktionellen Silan unter Ringöffnung erfolgen. Ferner können cyclische Carbamate und/oder Lactame als cyclische Verbindungen eingesetzt werden.

Die Umsetzung des mindestens difunktionellen Epoxids kann in einer Einstufenreaktion oder einer Mehrstufenreaktion erfolgen. Möglich ist insbesondere die Umsetzung der funktionalisierten Silanzwischenverbindung mit einem Epoxidacrylat, welches noch freie Epoxidgruppen aufweist.

Man erhält auf diese Weise ein radikalisch härtbares, Silan-terminiertes Epoxidacrylat mit kovalent an das Harz gebundenen Silangruppen, das im Wesentlichen frei von Epoxidgruppen ist, d. h. der Anteil an freien Epoxidgruppen liegt unter 2%, vorzugsweise unter 1% und bevorzugt unter 0,3%.

Der Anteil der zur Umsetzung mit dem mindestens difunktionellen Epoxid eingesetzten Silanzwischenverbindung in der Harzkomponente (A) beträgt vorzugsweise mindestens 2 Gew.-%, bevorzugt 2 bis 7 Gew.-%, bezogen auf die organischen Bestandteile der Harzkomponente (A).

Gemäß einer bevorzugten Ausführungsform der Erfindung enthält die Harzkomponente (A) in allen oben beschriebenen Ausführungsformen als weiteren Bestandteil mindestens einen Reaktivverdünner, der wenigstens eine ethylenisch ungesättigte Gruppe aufweist. Geeignete Reaktivverdünner sind insbesondere (Meth)acrylatverbindungen sowie Allyl- und Vinylverbindungen.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt aliphatische oder aromatische C₅-C₁₅-(Meth)acryiate ausgewählt werden. Geeignete Beispiele umfassen: Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat, TrimethyIoIpropantri(meth)acrylat, Phenethyl(meth)acrylat, Tetrahydrofurfuryl(meth)acrylat, Ethyltriglykol(meth)acrylat, *N,N-*Dimethylaminoethyl(meth)acrylat, *N*,*N*-Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat; PEG-di(meth)acrylate, wie PEG200-di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert*-Butyl(meth)acrylat und Norbornyl(meth)acrylat. Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen, wobei die nicht kennzeichnungspflichtigen Vertreter davon bevorzugt sind.

Besonders bevorzugte Reaktivverdünner sind Hydroxypropyl(meth)acrylat, 1,4-Butandioldi(meth)acrylat und Butandiol-1,2-di(meth)acrylat.

Der Reaktionsverdünner dient zum einen als Lösungsmittel für das radikalisch polymerisierbare Harz und zum anderen als ein Comonomer, das an der radikalischen Polymerisation der Harzkomponente teilnimmt. Die Verwendung von Reaktionsverdünnern führt zu einer weiteren Verbesserung der Haftung der ausgehärteten Mörtelmasse an den Oberflächen des mineralischen Untergrunds und/oder des zu befestigenden Bauteils.

Gemäß einer weiter bevorzugten Ausführungsform der Erfindung enthält die Harzkomponente (A) wenigstens einen Beschleuniger für das Härtungsmittel. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, *n*-Propylamin, Di-*n*-propylamin, Tri-*n*-propylamin, *Iso*-Propylamin, Di-*iso*-propylamin, Tri-*iso*-propylamin, *n*-Butylamin, Isobutylamin, *tert-*Butylamin, Di-*n*-butylamin, Di-*iso*-butylamin, Tri-*iso*-butylamin, Pentylamin, Iso-Pentylamin, Di-*iso*-pentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis(2-chloroethyl)amin, 2-Ethylhexylamin, Bis(2-ethylhexyl)amin, *N*-Methylstearylamin, Dialkylamine, Ethylendiamin, *N*,*N*'-Dimethylethylendiamin, Tetramethylethylendiamin, Diethylentriamin, Permethyl-diethylentriamin, Triethylentetramin, Tetraethylenpentamin, 1,2-Diaminopropan, Dipropylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, *N*,*N*-Dimethylaminoethanol, 2-(2-Diethylaminoethoxy)ethanol, Bis(2-hydroxyethyl)oleylamin, Tris[2-(2-hydroxy-ethoxy)ethyl]amin, 3-Amino-1-propanol, Methyl(3-aminopropyl)ether, Ethyl(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, *N*-Methylcyclohexylamin, *N*,*N*-Dimethylcyclohexylamin, Dicyclohexylamin, *N*-Ethylcyclohexylamin, *N*-(2-Hydroxyethyl)cyclohexylamin, *N,N-*Bis(2-hydroxyethyl)cyclohexylamin, *N*-(3-Aminopropyl)-cyclohexylamin, Aminomethylcyclohexan, Hexahydrotoluidin, Hexahydrobenzylamin, Anilin, *N-*Methylanilin, *N*,*N*-Dimethylanilin, *N*,*N*-Diethylanilin, *N*,*N*-Di-propylanilin, *iso*-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, *N*-Methylaminonaphthalin, *N,N-*Dimethylaminonaphthalin, *N*,*N*-Dibenzylnaphthalin, Diaminocyclohexan, 4,4'-Diaminodicyclohexylmethan, Diaminodimethyldicyclohexylmethan, Phenylendiamin, Xylylendiamin, Diaminobiphenyl, Naphthalindiamine, Toluidine, Benzidine, 2,2-Bis(aminophenyl)propan, Aminoanisole, Aminothiophenole, Aminodiphenylether, Aminokresole, Morpholin, *N*-Methylmorpholin, *N*-Phenylmorpholin, Hydroxyethylmorpholin, *N*-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und *N*,*N*-Dimethyl-*p*-toluidin.

Bevorzugte Amine sind Anilin-Derivate und *N*,*N*-Bisalkylarylamine, wie *N,N-*Dimethylanilin, *N*,*N*-Diethylanilin, *N*,*N*-Dimethyl-*p*-toluidin, *N,N-*Bis(hydroxyalkyl)arylamine, *N*,*N*-Bis(2-hydroxyethyl)aniline, *N*,*N*-Bis(2-hydroxyethyl)toluidin, *N*,*N*-Bis(2-hydroxypropyl)anilin, *N*,*N*-Bis(2-hydroxypropyl)toluidin, *N*,*N*-Bis(3-methacryloyl-2-hydroxypropyl)-*p*-toluidin, *N*,*N*-Dibutoxyhydroxypropyl-*p-*toluidin und 4,4'-Bis(dimethylamino)diphenylmethan.

Polymere Amine, wie solche die durch Polykondensation von *N,N-*Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind, zum Beispiel Cobaltoctoat oder Cobaltnaphthenoat sowie Vanadium-, Kalium-, Kalzium-, Kupfer-, Mangan- oder Zirkoniumcarboxylate.

Die Harzmischung kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Weiterhin kann die Harzkomponente (A) einen oder mehrere der üblichen Polymerisationsinhibitoren enthalten. Als Polymerisationsinhibitoren sind die für radikalisch polymerisierbare Verbindungen üblicherweise verwendeten Polymerisationsinhibitoren geeignet, wie sie dem Fachmann bekannt sind.

Zur Stabilisierung gegen vorzeitige Polymerisation enthalten Harzmischungen und Reaktionsharzmörtel üblicherweise Polymerisationsinhibitoren, wie Hydrochinon, substituierte Hydrochinone, z.B. 4-Methoxyphenol, Phenothiazin, Benzochinon oder *tert*-Butylbrenzcatechin, wie beispielsweise in der EP 1935860 A1 oder EP 0965619 A1 beschrieben werden, Nitroxylverbindungen, insbesondere stabile Nitroxylradikale, auch *N*-Oxyl-Radikale genannt, wie Piperidinyl-*N*-oxyl oder Tetrahydropyrrol-*N*-oxyl, wie sie in der DE 19531649 A1 beschrieben sind. Besonders bevorzugt wird 4-Hydroxy-2,2,6,6-tetramethylpiperidin-*N*-oxyl (im Folgenden als TEMPOL bezeichnet) zur Stabilisierung verwendet, was den Vorteil hat, dass damit auch die Gelzeit eingestellt werden kann.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert-*butylphenol, 2,4,6-Trimethylphenol, 2,4,6-Tris(dimethylaminomethyl)phenol, 4,4'-Thio-bis(3-methyl-6-*tert*-butylphenol), 4,4'-lsopropylidendiphenol, 1,3,5-Trimethyl-2,4,6-tris(3,5-di-*tert*-butyl-4-hydroxybenzyl)benzol, 2,2'-Methylen-di-*p*-cresol, Brenzcatechin und Butylbrenzcatechine, wie 4-*tert*-Butylbrenzcatechin, 4,6-Di-*tert*-butylbrenzcatechin, Hydrochinone, wie Hydrochinon, 2-Methylhydrochinon, 2-*tert*-Butylhydrochinon, 2,5-Di-*tert*-butylhydrochinon, 2,6-Di-*tert*-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und *N*-Oxyl-Radikale in Betracht. Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-*O*-(benzyloxycarbonyl)oxim und dergleichen. Ferner können in para-Position zur Hydroxylgruppe substituierte Pyrimidinol- oder Pyridinol-Verbindungen, wie sie in der nicht vorveröffentlichten Patentschrift Anmeldung DE 10 2011 077 248 B1 beschrieben sind als Polymerisationsinhibitoren verwendet werden.

Die Polymerisationsinhibitoren können, abhängig von den gewünschten Eigenschaften und der Verwendung der Harzmischung, entweder alleine oder als Kombination von zweien oder mehreren davon verwendet werden. Die Kombination der phenolischen und der nicht-phenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

Das in der Härterkomponente (B) der erfindungsgemäßen Zweikomponenten-Mörtelmasse enthaltene Härtungsmittel für das radikalisch polymerisierbare Harz der Harzkomponente (A) umfasst vorzugsweise mindestens ein organisches Peroxid, beispielsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat.

Die organischen Peroxide sind vorzugsweise phlegmatisiert, insbesondere durch Zusatz von Wasser als Phlegmatisierungsmittel und/oder Lösungsmittel. Geeignete Härterkomponenten sind dem Fachmann bekannt und auf dem Markt erhältlich.

Schließlich kann die erfindungsgemäße Zweikomponenten-Mörtelmasse in der Harzkomponente (A) und/oder in der Härterkomponente (B) mindestens einen anorganischen Füllstoff enthalten. Beispiele für geeignete Füllstoffe sind Quarz, Glas, Korund, Porzellan, Steingut, Schwerspat, Leichtspat, Gips, Talkum und/oder Kreide sowie deren Mischungen in Form von Sanden, Mehlen oder Formkörpern, vorzugsweise in Form von Fasern oder Kugeln.

Gemäß einer weiter bevorzugten Ausführungsform der Erfindung kann die Harzkomponente (A) neben dem radikalisch polymerisierbaren Harz zusätzlich noch eine hydraulisch abbindende oder polykondensierbare anorganische Verbindung, wie Zement, vorzugsweise Eisenoxid-freien oder Eisenoxid-armen Zement wie Aluminat-Zement, und/oder Gips enthalten, wobei in diesem Fall die Härterkomponente (B) neben dem Härtungsmittel und dem für die Phlegmatisierung erforderlichen Wasser noch zusätzliches Wasser für das Aushärten der hydraulisch abbindenden oder polykondensierbaren anorganischen Verbindung enthält.

Schließlich kann die Mörtelmasse in der Harzkomponente (A) und/oder in der Härterkomponente (B) noch weitere übliche Zusätze wie Verdicker, Verflüssiger, und Thixotropiermittel enthalten, wie gefällte oder pyrogene Kieselsäure, Bentonite, Cellulosen und/oder Kaolin.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Die erfindungsgemäßen Zweikomponenten-Mörtelmassen können vorteilhaft die nachfolgende Gesamtzusammensetzung aus Harzkomponente (A) und Härterkomponente (B) aufweisen:
silaniertes, radikalisch härtbares Harz 8 - 30 Gew.-%
Reaktivverdünner 4 - 25 Gew.-%
organisches Peroxid 1 - 6,5 Gew.-%
Beschleuniger 0,01 - 0,5 Gew.-%
Thixotropiermittel 0 - 5,0 Gew.-%
hydraulisch abbindendes bzw. polykondensierbares Material 10 - 35 Gew.-%
mineralische Füllstoffe 20 - 55 Gew.-%
Wasser 6 - 20 Gew.%.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Das Härtungsmittel der Härterkomponente (B) initiiert die radikalische Polymerisation der Harzkomponente (A), sodass die Mörtelmasse unter Umgebungsbedingungen innerhalb weniger Stunden aushärtet. Durch Hydrolyse und Kondensation der kovalent an das Harz der Komponente (A) gebundenen Silangruppen erfolgt eine Nachvernetzung, wodurch dauerhaft hohe Lastwerte auch in feuchten oder nur unzureichend gereinigten Bohrlöchern erreicht werden.

Die erfindungsgemäße Zweikomponenten-Mörtelmasse ergibt nicht nur hohe Lastwerte auch bei feuchten Bohrlöchern und/oder bei schlechter Reinigung der in den mineralischen Untergrund eingebrachten Bohrlöcher. Es hat sich überraschenderweise gezeigt, dass diese hohen Lastwerte auch über längere Zeit stabil bleiben. Es kann nur vermutet werden, dass die kovalente Bindung der Silangruppen an das radikalisch polymerisierbare Harz bereits vor Initiierung der Polymerisation zu stabileren Polymergerüsten führt, als das Einpolymerisieren von Silanverbindungen in die Polymerketten während der Aushärtung der Mörtelmasse. Gleichzeitig bleiben die Silangruppen ausreichend beweglich, um durch Kondensation miteinander oder mit Hydroxygruppen auf dem mineralischen Untergrund oder den Füllstoffen der Mörtelmasse eine verbesserte Haftung zu ergeben.

Gegenstand der Erfindung ist daher auch die Verwendung der erfindungsgemäßen Zweikomponenten-Mörtelmasse zur chemischen Befestigung von Bauteilen, insbesondere Ankergewindestangen, Bewehrungseisen, Gewindehülsen und Schrauben, in Bohrlöchern, die in einem mineralischem Untergrund, vorzugsweise Beton, vorliegen.

Weitere Vorteile der Erfindung ergeben sich aus den folgenden Beispielen, die jedoch keiner Weise einschränkend zu verstehen sind.

### Beispiel 1

### Herstellung eines Referenzharzes (UMA-REF)

743,4 g Hydroxypropylmethacrylat (HPMA) werden vollständig im Reaktor vorgelegt, mit 0,188 g 4-Hydroxy-2,2,6,6-tetramethyl-piperidinyl-1-oxyl (TEMPOL) und 0,0753 g Phenothiazin als Polymerisationsinhibitoren sowie 0,151 g Dioctylzinndilaurat (TIB™ KAT 216; TIB Chemicals AG) als Beschleuniger versetzt und auf 60°C erwärmt.

Anschließend werden 234,6 g Polymethylenpolyphenylisocyanat (PMDI) unter Rühren zugetropft, wobei die Innentemperatur auf ca. 80°C - 90°C ansteigt. Nach Beendigung der Zugabe wird der Ansatz noch solange weiter gerührt bis der NCO-Gehalt unter 0,3% gefallen ist. Die Innentemperatur darf dabei nicht unter 80°C sinken. Der NCO-Gehalt wird in bekannter Weise durch Titration (DIN EN 1242) bestimmt.

Nach Beendigung der Nachreaktion werden 6,75 g TEMPOL zugegeben und 15 min gelöst. Anschließend werden 25,5 g Toluidin als Beschleuniger zugegeben und etwa 30 min lang unter Rühren gelöst. Danach werden 226 g HPMA und 489 g Butandiol-1,4-dimethacrylat (BDDMA) als Reaktivverdünner zugegeben. Der gesamte Reaktionsansatz wird unter Rühren auf etwa 30°C abgekühlt.

### Beispiel 2

### Herstellung eines hydroxyfunktionellen Silans

Im Rundkolben werden 114,52 g (1,3 mmol) Ethylencarbonat und 287,21 g (1,297 mmol) 3-Aminopropyltriethoxysilan (Dynasilan™ AMEO; Evonik) 2,5 Stunden lang bei 35°C und danach noch 12 Stunden lang bei Raumtemperatur gerührt. Eine im IR-Spektrometer untersuchte Probe zeigte die vollständige Umsetzung des Ethylencarbonates.

### Beispiel 3

### Herstellung eines silanterminierten Urethan(meth)acrylatharzes (UMA-3)

49,52 g 2-Hydroxyethyl(3-(triethoxysilan)propyl)carbamat aus Beispiel 2, 71,1 g HPMA und 490 g BDDMA werden im Reaktor vorgelegt, mit 0,188 g TEMPOL, 0,0753 g Phenothiazin sowie 0,151 g Dioctylzinndilaurat (TIB™ KAT 216; TIB Chemicals AG) versetzt und auf 50°C erwärmt. Anschließend werden 234,6 g Polymethylenpolyphenylisocyanat (PMDI) unter Rühren zugetropft, wobei die Innentemperatur auf ca. 80°C - 90°C ansteigt. Anschließend werden 397 g HPMA zugegeben und noch 3,5 Stunden lang bei 60°C gerührt. Nach Beendigung der Zugabe wird der Ansatz noch solange weiter gerührt bis der NCO-Gehalt unter 0,3% gefallen ist (bestimmt durch Titration gemäß DIN EN 1242). Die Innentemperatur soll dabei nicht unter 80°C sinken.

Nach Beendigung der Nachreaktion werden 6,75 g TEMPOL zugegeben und 15 min gelöst. Anschließend werden 25,5 g Toluidin zugegeben und etwa 30 min lang unter Rühren gelöst. Im Anschluss werden 226 g HPMA zugegeben. Der gesamte Reaktionsansatz wird unter Rühren auf etwa 30 °C abgekühlt.

Auf die gleiche Weise wurden radikalisch polymerisierbare Harze als Harzkomponente (A) mit unterschiedlichen Anteilen hydroxyfunktionellem Silan (2-Hydroxyethyl-(3-(triethoxysilan)propyl)carbamat) von etwa 1,6 Gew.-%, 3,3 Gew.-%, 6,6 Gew.-% und 9,5 Gew.-% hergestellt.

Die Zusammensetzung der so erhaltenen Harzkomponenten UMA-1,5, UMA-3, UMA-6 und UMA-9 sowie des Vergleichsharzes UMA-REF sind in der nachfolgenden Tabelle 1 angegeben.

**Tabelle 1**

| Harz | Vergleich UMA-REF [Gew.-%] | Vergleich UMA-1,5 [Gew.-%] | Erfindung UMA-3 [Gew.-%] | Erfindung UMA-6 [Gew.-%] | Erfindung UMA-9 [Gew.-%] |
|---|---|---|---|---|---|
| Grundharz | | | | | |
| 2-Hydroxyethyl(3-triethoxysilan)propyl) carbamat | 0 | 1,6 | 3,3 | 6,6 | 9,5 |
| Hydroxypropylmethacrylat | 49,6 | 48,0 | 46,3 | 43,0 | 40,1 |
| PMDI | 15,6 | 15,6 | 15,6 | 15,6 | 15,6 |
| TIB KAT 216 (Beschleuniger) | 0,01 | 0,01 | 0,01 | 0,01 | 0,01 |
| Phenothiazin (Inhibitor) | 0,01 | 0,01 | 0,01 | 0,01 | 0,01 |
| Reaktivverdünner | | | | | |
| Butandiol-1,4-dimethacrylat | 32,6 | 32,6 | 32,6 | 32,6 | 32,6 |
| *p*-Toluidin/ (Beschleuniger) | 1,70 | 1,70 | 1,70 | 1,70 | 1,70 |
| TEMPOL (Inhibitor) *) | 0,5 | 0,5 | 0,5 | 0,5 | 0,5 |
| | | | | | |
| Summe, % | 100 | 100 | 100 | 100 | 100 |

| | | | | | |
|---|---|---|---|---|---|
| *) TEMPOL = 4-Hydroxy-2,2,6,6-tetramethyl-piperidinyl-1-oxyl | | | | | |

### Beispiel 4

### Zweikomponenten-Mörtelmasse auf Basis eines Urethanmethacrylatharzes

Man bereitet zunächst die Harzkomponente (A) einer Zweikomponenten-Mörtelmasse dadurch, dass man 39,3 g der in der obigen Tabelle 1 angegebenen Harze, also des Vergleichsharzes UMA-REF und der silanterminierten Harze UMA-1,5, UMA-3, UMA-6 und UMA-9, mit 37,2 g eines Quarzsandes (beispielsweise S32), 20,5 g eines Aluminat-Zements und 3 g einer hydrophoben pyrogenen Kieselsäure im Dissolver unter Vakuum zu einer luftblasenfreien pastösen Masse homogenisiert.

Das Vergleichsharz UMA-REF enthält kein Alkoxysilan, während die Harze UMA-1,5, UMA-3, UMA-6 und UMA-9 jeweils die angegebene Menge der kovalent mit dem Grundharz verbundenen Silanverbindung enthalten. Die auf diese Weise erhaltenen Harzkomponenten (A) werden jeweils in eine Kartusche eingebracht.

Als Härterkomponente (B) der Zweikomponenten-Mörtelmasse verwendet man eine wässrige Benzoylperoxidsuspension, die 64 Gew.-% Füllstoff in Form einer Mischung aus Quarzmehl und pyrogener Kieselsäure, 12,4 Gew.-% Benzoylperoxid und Wasser als Rest enthält und die in eine zweite Kartusche eingefüllt wird.

Zur Anwendung als chemische Mörtelmasse zur Befestigung von Bauteilen werden die Harzkomponente (A) und die Härterkomponente (B) aus den Kartuschen ausgepresst und durch einen Statikmischer geführt, wodurch die Reaktion dieser Komponenten unter Aushärtung des Reaktionsharzes und wahlweise des Zements einsetzt. Die reagierende Masse wird in das Bohrloch eingespritzt, worauf das zu befestigende Bauteil eingeführt und justiert wird.

### Beispiel 5

Zur Bestimmung der mit diesen Zweikomponenten-Mörtelmassen erzielten Lastwerte verwendet man eine hochfeste Ankergewindestange M12, die in ein Bohrloch mit einem Durchmesser von 14 mm und einer Bohrlochtiefe von 72 mm mit der erfindungsgemäßen Zweikomponenten-Mörtelmasse eingedübelt wird. Man ermittelt nach einer vorbestimmten Aushärtezeit bei Raumtemperatur die mittlere Versagenslast durch zentrisches Ausziehen der Ankergewindestange mit enger Abstützung und bestimmt die mittlere Versagenslast von fünf Ankern.

Die untersuchten Bohrlöcher wurden unter Verwendung eines Hohlbohrers präpariert, bei dem der Bohrstaub bereits während des Bohrvorgangs durch einen angeschlossenen Staubsauger entfernt wurde. Auf diese Weise kann die separate Reinigung des Bohrlochs entfallen.

Zur Ermittlung der Lastwerte in trockenem Beton (Vergleich) wurde die Ankerstange in die Mörtelmasse gesetzt und 4 Stunden lang bei Raumtemperatur ausgehärtet.

Zur Ermittlung der Lastwerte in feuchtem Beton wurden die Bohrlöcher mit Wasser befüllt, wonach man das Wasser einen Tag lang einwirken ließ. Danach wurde das Wasser abgesaugt und die Ankerstange unter Verwendung der Mörtelmasse gesetzt. Die Aushärtung der Mörtelmasse erfolgte bei Raumtemperatur während 24 Stunden.

Die unter Verwendung der in Beispiel 4 beschriebenen Mörtelrezepturen mit Harzzusammensetzungen gemäß den Beispielen 1 und 3 erhaltenen Verbundspannungen für trockene Bohrlöcher und feuchte Bohrlöcher sind in der nachfolgenden Tabelle 2 zusammengestellt:

**Tabelle 2**

| | Verbundspannung [N/mm²] | | Differenz % |
|---|---|---|---|
| | Trockener Beton | Bewässerter Beton | |
| | | | |
| Vergleich UMA-REF | 19,1 ± 1,76 | 9,0 ± 1,56 | 53 |
| Vergleich UMA-1,5 | 18,7 ± 1,04 | 7,9 ± 0,86 | 58 |
| Erfindung UMA-3 | 18,7 ± 1,03 | 14,6 ± 3,36 | 22 |
| Erfindung UMA-6 | 17,4 ± 0,43 | 11,4 ± 0,94 | 34 |
| Erfindung UMA-9 | 16,3 ± 1,08 | 10,4 ± 1,84 | 36 |

Wie aus der obigen Tabelle 2 zu erkennen ist, ergibt die erfindungsgemäße Zweikomponenten-Mörtelmasse nicht nur eine verbesserte Haftung der Ankerstangen an trockenem Beton, sondern auch eine deutlich schwächere Verringerung der Lastwerte bei der Anwendung in feuchten Bohrlöchern. Zu erkennen ist weiter, dass die Mörtelmasse UMA-3 mit einem Anteil von nur etwa 3 Gew.-% des kovalent an das Grundharz gebundenen Silans (2-Hydroxyethyl(3(triethoxysilan)propyl)carbamat) die besten Werte für die Lastwertminderung in feuchten Bohrlöchern ergibt. Eine Erhöhung des Silananteils auf über etwa 7 Gew.-% zeigt keinen Vorteil. Die Leistungsverbesserung der ausgehärteten Mörtelmasse ist auch alterungsstabil und bleibt nach mehreren Wochen noch erhalten

In der nachfolgenden Tabelle 3 sind die molaren Anteile der NCO-Gruppen des eingesetzten Isocyanats im Verhältnis zu den Anteilen der hydroxyfunktionellen Silanverbindung in den erfindungsgemäßen Harzzusammensetzungen angegeben.

**Tabelle 3**

| Harz | Vergleich UMA-REF | Vergleich UMA-1,5 | Erfindung UMA-3 | Erfindung UMA-6 | Erfindung UMA-9 |
|---|---|---|---|---|---|
| 2-Hydroxyethyl(3-triethoxysilan)propyl) carbamate, [Gew.-%] in der Formulierung | 0 | 1,6 | 3,3 | 6,6 | 9,5 |
| n (OH), [mol] in der Formulierung | 0 | 0,052 | 0,107 | 0,213 | 0,307 |
| PMDI, [Gew.-%] in der Formulierung | 15,64 | 15,64 | 15,64 | 15,64 | 15,64 |
| n(NCO), [mol] in der Formulierung | 1,176 | 1,176 | 1,176 | 1,176 | 1,176 |
| **n(NCO) / n(OH)** | - | 22,6 | 11 | 5,5 | 3,8 |
| Lasten, kN Trockener Beton | 51,8 | 50,6 | 50,6 | 47,2 | 44,2 |
| Lasten, kN Bewässerter Beton | 24,3 | 21,5 | 39,6 | 31,0 | 28,2 |

Zu erkennen ist, dass ein molares Verhältnis der NCO-Gruppen zu den OH-Gruppen des hydroxyfunktionellen Silans von zwischen etwa 15:1 bis 5:1 besonders vorteilhaft für eine Verbesserung der mechanischen Eigenschaften der ausgehärteten Mörtelmasse ist.

## Patentansprüche

1. Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält,
wobei das radikalisch härtbare Harz erhältlich ist durch Umsetzung einer mindestens difunktionellen Komponente, die zwei oder mehrere reaktive Gruppen (RG-A) aufweist, mit einer Silanzwischenverbindung und einer ethylenisch ungesättigten Verbindung, wobei die Silanzwischenverbindung und die ethylenisch ungesättigte Verbindung jeweils aktive funktionelle Gruppen (AG) aufweisen, die mit den reaktiven Gruppen (RG-A) unter Bildung einer kovalenten Bindung reagieren,
wobei die Silanzwischenverbindung das Umsetzungsprodukt einer cyclischen organischen Verbindung mit einer funktionalisierten Silanverbindung ist, die wenigstens eine reaktive Gruppe (RG-B) aufweist, wobei die cyclische organische Verbindung die aktive funktionelle Gruppe (AG) oder einen Vorläufer dafür und eine reaktive Gruppe (RG-C) aufweist, die mit der reaktiven Gruppe (RG-B) der funktionalisierten Silanverbindung unter Bildung der Silanzwischenverbindung reagiert und wobei die Silanzwischenverbindung in einem Anteil von mindestens etwa 2 Gew.-% der Harzkomponente (A) eingesetzt wird, bezogen auf die organischen Bestanteile der Harzkomponente (A).

2. Mörtelmasse nach Anspruch 1, **dadurch gekennzeichnet, dass** die reaktiven Gruppen (RG-A) höchstens in einem stöchiometrischen Verhältnis, vorzugsweise im Unterschuss zu den aktiven Gruppen (AG) vorliegen.

3. Mörtelmasse nach Anspruch 1 oder 2, **dadurch gekennzeichnet, dass** die reaktiven Gruppen (RG-A) aus der aus Carboxylgruppen, Isocyanatgruppen, Oxirangruppen und Imidogruppen bestehenden Gruppe ausgewählt sind.

4. Mörtelmasse nach einem der Ansprüche 1 bis 3, **dadurch gekennzeichnet, dass** die aktiven Gruppen (AG) aus der aus Carboxylgruppen, Hydroxygruppen, Aminogruppen und Thiogruppen bestehenden Gruppe ausgewählt sind.

5. Mörtelmasse nach einem der vorhergehenden Ansprüche, **dadurch gekennzeichnet, dass** die cyclische organische Verbindung aus der aus cyclischen Anhydriden, Carbonaten, Thiocarbonaten, Carbamaten, Thiocarbamaten, Harnstoffen, Lactonen und Lactamen bestehenden Gruppe ausgewählt ist.

6. Mörtelmasse nach einem der vorhergehenden Ansprüche, **dadurch gekennzeichnet, dass** die funktionalisierte Silanverbindung ein Hydroxysilan, Mercaptosilan oder ein Aminosilan ist.

7. Mörtelmasse nach einem der vorhergehenden Ansprüche, **dadurch gekennzeichnet, dass** die funktionalisierte Silanverbindung eine Si-gebundene hydrolisierbare Gruppe trägt.

8. Zweikomponenten-Mörtelmasse gemäß einem der vorhergehenden Ansprüche, mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält,
wobei das radikalisch härtbare Harz erhältlich ist durch Umsetzung eines mindestens difunktionellen Isocyanats mit einem hydroxyfunktionellen Silan und einer hydroxyfunktionellen, ethylenisch ungesättigten Verbindung,
wobei das hydroxyfunktionelle Silan das Umsetzungsprodukt einer cyclischen Verbindung aus der Gruppe der cyclischen Carbonate, Lactone und Carbamate mit einer aus der Gruppe der amino-, hydroxy- oder mercaptofunktionellen Silanen ausgewählten Silanverbindung ist und wobei der Anteil der hydroxyfunktionellen Silanverbindung in der Harzkomponente (A) mindestens 2 Gew.-% beträgt, bezogen auf das Gesamtgewicht der organischen Bestandteile der Harzkomponente (A).

9. Mörtelmasse nach Anspruch 8, **dadurch gekennzeichnet, dass** das mindestens difunktionelle Isocyanat ausgewählt ist aus der Gruppe bestehend aus aliphatischen und aromatischen Isocyanaten sowie Isocyanat-Präpolymeren und deren Mischungen.

10. Mörtelmasse nach Anspruch 8 oder 9, **dadurch gekennzeichnet, dass** die hydroxyfunktionelle, ethylenisch ungesättigte Verbindung eine hydroxylgruppenhaltiger (Meth)acrylsäureester von zwei oder mehrwertigen Alkoholen, insbesondere aliphatischen Alkoholen, ist.

11. Mörtelmasse nach Anspruch einem der vorhergehenden Ansprüche 8 bis 10, **dadurch gekennzeichnet, dass** die cyclische Verbindung mit einer aminofunktionellen Silanverbindung umgesetzt wird, die eine primäre oder sekundäre Aminogruppe enthält.

12. Mörtelmasse nach einem der vorhergehenden Ansprüche 8 bis 11, **dadurch gekennzeichnet, dass** die cyclische Verbindung ein cyclisches Carbonat ist.

13. Mörtelmasse nach einem der vorhergehenden Ansprüche 8 bis 12, **dadurch gekennzeichnet, dass** das hydroxyfunktionelle Silan der folgenden Formel (I) entspricht: 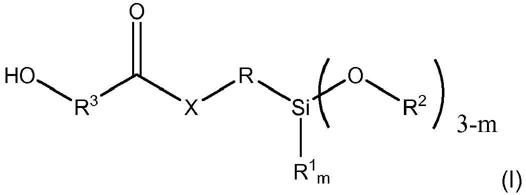 worin m 0, 1 oder 2 ist,
R¹ ein Alkylrest mit 1 bis 4 Kohlenstoffatomen,
R² ein Alkylrest mit 1 bis 4 Kohlenstoffatomen,
R³ ein divalenter organischer Rest mit 1 bis 10 Atomen ausgewählt aus C, N, S und/oder O in der Kette ist,
X bedeutet O, NR⁴ oder S,
wobei R⁴ ein Wasserstoffatom oder ein Alkylrest mit 1 bis 10 Kohlenstoffatomen ist und
R eine difunktionelle organische Gruppe ist.

14. Mörtelmasse nach Anspruch 13, **dadurch gekennzeichnet, dass** R³ die in der folgenden Formel (II) angegebene Bedeutung besitzt: 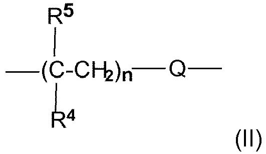 worin n eine ganze Zahl zwischen 1 und 6 ist,
Q eine kovalente Bindung, O oder NR⁴ bedeutet, und
R⁴ und R⁵ unabhängig voneinander ein Wasserstoffatom oder ein Alkylrest mit 1 bis 10 Kohlenstoffatomen sind.

15. Mörtelmasse nach einem der vorangehenden Ansprüche 8 bis 14, **dadurch gekennzeichnet, dass** das molare Verhältnis der Isocyanatgruppen zu den Hydroxygruppen des hydroxyfunktionellen Silans im Bereich von 23:1 bis 3,5:1 liegt, vorzugsweise im Bereich von 15:1 bis 5:1.

16. Mörtelmasse nach einem der vorangehenden Ansprüche 8 bis 15, **dadurch gekennzeichnet, dass** der Anteil der hydroxyfunktionellen Silanverbindung in der Harzkomponente (A) 2 bis 7 Gew.-% beträgt, bezogen auf das Gesamtgewicht der organischen Bestandteile der Harzkomponente (A).

17. Mörtelmasse nach einem der vorangehenden Ansprüche 1 bis 7, **dadurch gekennzeichnet, dass** das radikalisch härtbare Harz erhältlich ist durch Umsetzung eines mindestens difunktionellen Epoxids mit der Silanzwischenverbindung und einer carboxyfunktionellen ethylenisch ungesättigten Verbindung.

18. Mörtelmasse nach einem der vorangehenden Ansprüche, **dadurch gekennzeichnet, dass** die Harzkomponente (A) als weiteren Bestandteil mindestens einen Reaktivverdünner enthält.

19. Mörtelmasse nach einem der vorangehenden Ansprüche, **dadurch gekennzeichnet, dass** die Harzkomponente (A) als weiteren Bestandteil mindestens einen Beschleuniger umfasst.

20. Mörtelmasse nach einem der vorangehenden Ansprüche, **dadurch gekennzeichnet, dass** die Harzkomponente (A) und/oder die Härterkomponente (B) als weiteren Bestandteil mindestens einen anorganischen Füllstoff enthält.

21. Mörtelmasse nach einem der vorangehenden Ansprüche, **dadurch gekennzeichnet, dass** die Harzkomponente (A) als weiteren Bestandteil eine hydraulisch abbindende oder polykondensierbare anorganische Verbindung enthält.

22. Mörtelmasse nach einem der vorangehenden Ansprüche, **dadurch gekennzeichnet, dass** die Härterkomponente (B) als Härtungsmittel mindestens ein organisches Peroxid, insbesondere Dibenzoylperoxid, Methylethylketonperoxid, *tert*-Butylperbenzoat, Cyclohexanonperoxid, Laurylperoxid, Cumolhydroperoxid und/oder *tert*-Butylperoxy-2-ethylhexanoat enthält.

23. Mörtelmasse nach einem der vorangehenden Ansprüche, **dadurch gekennzeichnet, dass** die Masse in einer Patrone, einer Kartusche oder einem Folienbeutel vorliegt, wobei die Harzkomponente (A) und die Härterkomponente (B) in voneinander getrennten Kammern angeordnet sind.

24. Verwendung der Zweikomponenten-Mörtelmasse gemäß einem der vorhergehenden Ansprüche zur chemischen Befestigung von Bauteilen wie Ankergewindestangen, Bewehrungseisen, Gewindehülsen und Schrauben, in Bohrlöchern, die in einem mineralischen Untergrund vorliegen.

## Claims

1. Two-component mortar mass with a resin component (A), which contains at least a radically hardenable resin as hardenable component, and a hardener component (B), which contains a hardener for the radically hardenable resin of the resin component (A),
in which the radically hardenable resin is obtained by converting an at least difunctional component, which has two or more reactive groups (RG-A), with a silane intermediate compound and an ethylenically unsaturated compound, in which the silane intermediate compound and the ethylenically unsaturated compound each have active functional groups (AG), which react with the reactive groups (RG-A), forming a covalent bond,
in which the silane intermediate compound is the conversion product of a cyclic organic compound with a functionalised silane compound, which has at least a reactive group (RG-B), in which the cyclic organic compound has the active functional group (AG) or a precursor for it and a reactive group (RG-C), which reacts with the reactive group (RG-B) of the functionalised silane compound, forming the silane intermediate compound, and in which the silane intermediate compound is used in a proportion of at least about 2% by weight of the resin component (A) with reference to the organic components of the resin component (A).

2. Mortar mass according to claim 1, **characterised in that** the reactive groups (RG-A) are present in a not more than stoichiometric ratio, preferably falling short of the active groups (AG).

3. Mortar mass according to claim 1 or 2, **characterised in that** the reactive groups (RG-A) are selected from the group consisting of carboxyl groups, isocyanate groups, oxirane groups and imido groups.

4. Mortar mass according to one of claims 1 to 3, **characterised in that** the active groups (AG) are selected from the group consisting of carboxyl groups, hydroxy groups, amino groups and thio groups.

5. Mortar mass according to one of the previous claims, **characterised in that** the cyclic organic compound is selected from the group consisting of cyclic anhydrides, carbonates, thiocarbonates, carbamates, thiocarbamates, urea, lactones and lactams.

6. Mortar mass according to one of the previous claims, **characterised in that** the functionalised silane compound is a hydroxysilane, a mercaptosilane or an aminosilane.

7. Mortar mass according to one of the previous claims, **characterised in that** the functionalised silane compound carries an Si-bound hydrolisable group.

8. Two-component mortar mass according to one of the previous claims, with a resin component (A), which contains at least a radically hardenable resin as hardenable component, and a hardener component (B), which contains a hardener for the radically hardenable resin of the resin component (A),
in which the radically hardenable resin is obtained by converting an at least difunctional isocyanate with a hydroxyfunctional silane and a hydroxyfunctional, ethylenically unsaturated compound,
in which the hydroxyfunctional silane is the conversion product of a cyclic compound from the group of cyclic carbonates, lactones and carbamates with a silane compound selected from the group of amino, hydroxy or mercaptofunctional silanes and in which the proportion of the hydroxyfunctional silane compound in the resin component (A) amounts to at least 2% by weight with reference to the total weight of the organic components of the resin component (A).

9. Mortar mass according to claim 8, **characterised in that** the at least difunctional isocyanate is selected from the group consisting of aliphatic and aromatic isocyanates as well as isocyanate prepolymers and their mixtures.

10. Mortar mass according to claim 8 or 9, **characterised in that** the hydroxyfunctional, ethylenically unsaturated compound is a (meth)acrylic acid ester containing hydroxyl groups of bi or multivalent alcohols, particularly aliphatic alcohols.

11. Mortar mass according to claim one of previous claims 8 to 10, **characterised in that** the cyclic compound is converted with an aminofunctional silane compound, which contains a primary or secondary amino group.

12. Mortar mass according to one of previous claims 8 to 11, **characterised in that** the cyclic compound is a cyclic carbonate.

13. Mortar mass according to one of previous claims 8 to 12, **characterised in that** the hydroxyfunctional silane corresponds to the following formula (I): 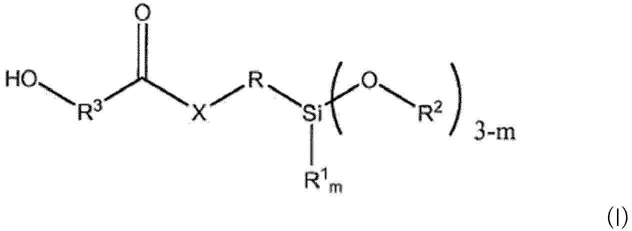 in which m is 0, 1 or 2,
R¹ is an alkyl residue with 1 to 4 carbon atoms,
R² is an alkyl residue with 1 to 4 carbon atoms,
R³ is a divalent organic residue with 1 to 10 atoms selected from C, N, S and/or 0 in the chain,
X means 0, NR⁴ or S,
in which R⁴ is a hydrogen atom or an alkyl residue with 1 to 10 carbon atoms and
R is a difunctional organic group.

14. Mortar mass according to claim 13, **characterised in that** R³ has the meaning indicated in the following formula (II): 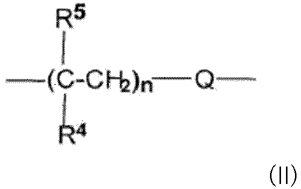 in which n is a whole number between 1 and 6,
Q means a covalent bond, 0 or NR⁴ and
R⁴ and R⁵ independently of each other are a hydrogen atom or an alkyl residue with 1 to 10 carbon atoms.

15. Mortar mass according to one of previous claims 8 to 14, **characterised in that** the molar ratio of isocyanate groups to the hydroxy groups of the hydroxyfunctional silane is in the range from 23:1 to 3.5:1, preferably in the range from 15:1 to 5:1.

16. Mortar mass according to one of previous claims 8 to 15, **characterised in that** the proportion of the hydroxyfunctional silane compound in the resin component (A) amounts to 2 to 7% by weight with reference to the total weight of the organic components of the resin component (A).

17. Mortar mass according to one of previous claims 1 to 7, **characterised in that** the radically hardenable resin is obtained by converting an at least difunctional epoxide with the silane intermediate compound and a carboxyfunctional ethylenically unsaturated compound.

18. Mortar mass according to one of the previous claims, **characterised in that** the resin component (A) contains at least a reactive thinner as a further component.

19. Mortar mass according to one of the previous claims, **characterised in that** the resin component (A) comprises at least an accelerator as a further component.

20. Mortar mass according to one of the previous claims, **characterised in that** the resin component (A) and/or the hardener component (B) contains at least an inorganic filler as a further component.

21. Mortar mass according to one of the previous claims, **characterised in that** the resin component (A) contains a hydraulically setting or polycondensable inorganic compound as a further component.

22. Mortar mass according to one of the previous claims, **characterised in that** the hardener component (B) contains at least an organic peroxide, particularly dibenzoyl peroxide, methyl ethyl ketone peroxide, *tert*-butyl perbenzoate, cyclohexanone peroxide, lauroyl peroxide, cumolhydroperoxide and/or *tert*-butyl peroxy-2-ethylhexanoate as hardener.

23. Mortar mass according to one of the previous claims, **characterised in that** the mass is in a cartridge, a pouch or a foil bag, in which the resin component (A) and the hardener component (B) are arranged in chambers separated from each other.

24. Use of the two-component mortar mass according to one of the previous claims for chemically fastening structural parts, such as anchor threaded rods, reinforcement bars, threaded sleeves and screws, in drill holes that are in a mineral substrate.

## Revendications

1. Composition de mortier à deux composants ayant un composant résine (A) qui contient au moins une résine durcissable par voie radicalaire en tant que constituant durcissable, et un composant durcisseur (B) qui contient un agent durcisseur pour la résine durcissable par voie radicalaire du composant résine (A),
dans laquelle la résine durcissable par voie radicalaire est obtenue en faisant réagir un composant au moins difonctionnel qui comporte deux ou plusieurs groupes réactifs (RG-A), avec un composé intermédiaire de silane et un composé insaturé éthyléniquement, dans laquelle le composé intermédiaire de silane et le composé insaturé éthyléniquement comportent respectivement des groupes fonctionnels actifs (AG) qui réagissent avec les groupes réactifs (RG-A) en formant une liaison covalente,
dans laquelle le composé intermédiaire de silane est le produit de réaction d'un composé organique cyclique avec un composé de silane fonctionnalisé qui comporte au moins un groupe réactif (RG-B), dans laquelle le composé organique cyclique comporte le groupe fonctionnel actif (AG) ou un précurseur de celui-ci et un groupe réactif (RG-C) qui réagit avec le groupe réactif (RG-B) du composé de silane fonctionnalisé en formant le composé intermédiaire de silane, et dans laquelle le composé intermédiaire de silane est utilisé dans une proportion d'au moins 2 % en poids environ du composant résine (A), par rapport aux constituants organiques du composant résine (A).

2. Composition de mortier selon la revendication 1, **caractérisée en ce que** les groupes réactifs (RG-A) sont présents au plus dans une proportion stœchiométrique, de préférence inférieure aux groupes actifs (AG).

3. Composition de mortier selon la revendication 1 ou 2, **caractérisée en ce que** les groupes réactifs (RG-A) sont choisis parmi le groupe constitué de groupes carboxyle, de groupes isocyanate, de groupes oxirane et de groupes imido.

4. Composition de mortier selon l'une des revendications 1 à 3, **caractérisée en ce que** les groupes actifs (AG) sont choisis parmi le groupe constitué de groupes carboxyle, de groupes hydroxy, de groupes amino et de groupes thio.

5. Composition de mortier selon l'une des revendications précédentes, **caractérisée en ce que** le composé organique cyclique est choisi parmi le groupe constitué d'anhydrides cycliques, de carbonates, de thiocarbonates, de carbamates, de thiocarbamates, d'urées, de lactones et de lactames.

6. Composition de mortier selon l'une des revendications précédentes, **caractérisée en ce que** le composé de silane fonctionnalisé est un hydroxysilane, un mercaptosilane ou un aminosilane.

7. Composition de mortier selon l'une des revendications précédentes, **caractérisée en ce que** le composé de silane fonctionnalisé porte un groupe hydrolysable lié à Si.

8. Composition de mortier à deux composants selon l'une des revendications précédentes, comportant un composant résine (A) qui contient au moins une résine durcissable par voie radicalaire en tant que constituant durcissable, et un composant durcisseur (B) qui contient un agent durcisseur pour la résine durcissable par voie radicalaire du composant résine (A),
dans laquelle la résine durcissable par voie radicalaire est obtenue en faisant réagir un isocyanate au moins difonctionnel avec un silane à fonction hydroxy et un composé insaturé éthyléniquement, à fonction hydroxy,
dans laquelle le silane à fonction hydroxy est le produit de réaction d'un composé cyclique choisi parmi le groupe des carbonates, des lactones et des carbamates cycliques avec un composé de silane choisi parmi le groupe des silanes à fonction amino, hydroxy ou mercapto, et dans laquelle la proportion du composé de silane à fonction hydroxy dans le composant résine (A) est au moins de 2 % en poids, par rapport au poids total des constituants organiques du composant résine (A).

9. Composition de mortier selon la revendication 8, **caractérisée en ce que** l'isocyanate au moins difonctionnel est choisi parmi le groupe constitué d'isocyanates aliphatiques et aromatiques ainsi que de prépolymères d'isocyanate et leurs mélanges.

10. Composition de mortier selon la revendication 8 ou 9, **caractérisée en ce que** le composé insaturé éthyléniquement, à fonction hydroxy est un ester d'acide (méth)acrylique, contenant des groupes hydroxyle d'alcools di- ou multivalents, en particulier des alcools aliphatiques.

11. Composition de mortier selon l'une des revendications 8 à 10 précédentes, **caractérisée en ce que** le composé cyclique réagit avec un composé de silane à fonction amino qui contient un groupe amino primaire ou secondaire.

12. Composition de mortier selon l'une des revendications 8 à 11 précédentes, **caractérisée en ce que** le composé cyclique est un carbonate cyclique.

13. Composition de mortier selon l'une des revendications 8 à 12 précédentes, **caractérisée en ce que** le silane à fonction hydroxy correspond à la formule (I) suivante : 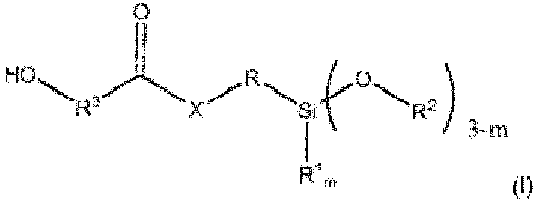
dans laquelle m est égal à 0, 1 ou 2,
R¹ est un radical alkyle avec 1 à 4 atomes de carbone,
R² est un radical alkyle avec 1 à 4 atomes de carbone,
R³ est un radical organique divalent avec 1 à 10 atomes choisis parmi C, N, S et/ou O dans la chaîne,
X représente O, NR⁴ ou S,
où R⁴ est un atome d'hydrogène ou un radical alkyle avec 1 à 10 atomes de carbone et
R est un groupe organique difonctionnel.

14. Composition de mortier selon la revendication 13, **caractérisée en ce que** R³ a la signification indiquée dans la formule (II) suivante : 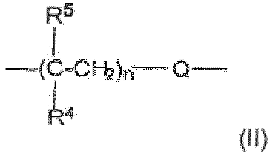
dans laquelle n est un nombre entier compris entre 1 et 6,
Q représente une liaison covalente, O ou NR⁴, et
R⁴ et R⁵ sont, indépendamment l'un de l'autre, un atome d'hydrogène ou un radical alkyle avec 1 à 10 atomes de carbone.

15. Composition de mortier selon l'une des revendications 8 à 14 précédentes, **caractérisée en ce que** le rapport molaire des groupes isocyanate sur les groupes hydroxy du silane à fonction hydroxy est dans la plage de 23:1 à 3,5:1, de préférence dans la plage de 15:1 à 5:1.

16. Composition de mortier selon l'une des revendications 8 à 15 précédentes, **caractérisée en ce que** la proportion du composé de silane à fonction hydroxy dans le composant résine (A) est de 2 à 7 % en poids, par rapport au poids total des constituants organiques du composant résine (A).

17. Composition de mortier selon l'une des revendications 1 à 7 précédentes, **caractérisée en ce que** la résine durcissable par voie radicalaire est obtenue en faisant réagir un époxyde au moins difonctionnel avec le composé intermédiaire de silane et un composé insaturé éthyléniquement à fonction carboxy.

18. Composition de mortier selon l'une des revendications précédentes, **caractérisée en ce que** le composant résine (A) contient au moins un diluant réactif en tant que constituant supplémentaire.

19. Composition de mortier selon l'une des revendications précédentes, **caractérisée en ce que** le composant résine (A) inclut au moins un accélérateur en tant que constituant supplémentaire.

20. Composition de mortier selon l'une des revendications précédentes, **caractérisée en ce que** le composant résine (A) et/ou le composant durcisseur (B) contient au moins une charge inorganique en tant que constituant supplémentaire.

21. Composition de mortier selon l'une des revendications précédentes, **caractérisée en ce que** le composant résine (A) contient un composé inorganique hydrauliquement liant ou polycondensable en tant que constituant supplémentaire.

22. Composition de mortier selon l'une des revendications précédentes, **caractérisée en ce que** le composant résine (B) contient au moins un peroxyde organique, en particulier du peroxyde de dibenzoyle, du peroxyde de méthyléthylcétone, du tert-butylperbenzoate, du peroxyde de cyclohexanone, du peroxyde de lauryle, de l'hydroperoxyde de cumol et/ou du tert-butylperoxy-2-éthylhexanoate, en tant qu'agent durcisseur.

23. Composition de mortier selon l'une des revendications précédentes, **caractérisée en ce que** la composition est fournie dans une enveloppe, une cartouche ou un sac en pellicule, dans laquelle le composant résine (A) et le composant durcisseur (B) sont disposés dans des chambres séparées l'une de l'autre.

24. Utilisation de la composition de mortier à deux composants selon l'une des revendications précédentes pour la fixation chimique d'éléments de construction tels que des tiges d'ancrage filetées, des fers d'armature, des douilles filetées et des vis, dans des trous percés qui sont présents dans un substrat minéral.
